# EUROPÄISCHE PATENTSCHRIFT

(11) **EP 0 828 399 B1**
(45) Veröffentlichungstag und Bekanntmachung des Hinweises auf die Patenterteilung: **07.06.2006**
(21) Anmeldenummer: 97114216.1
(22) Anmeldetag: 18.08.1997
(51) Int. Cl.: H04Q 7/38

(54) **Verfahren zum Subscripieren von mobilen Kommunikationsendgeräten für Zugriffe auf öffentliche, private und Heim-Bereiche**
Method for subscribing mobile communications terminals for access to public, private or domestic areas
Méthode de subscription de terminaux de communication mobile pour l'accès à des zones publiques, privées ou locales

(30) Priorität: 06.09.1996 DE 19636256
(43) Veröffentlichungstag der Anmeldung: 11.03.1998
(73) Patentinhaber: SIEMENS AKTIENGESELLSCHAFT, 80333 München (DE)
(72) Erfinder: Morper, Hans-Jochen, 85253 Erdweg (DE); Ruckstuhl, Hanspeter, 80804 München (DE)

(56) Entgegenhaltungen:
- EP-A- 0 627 864
- HAVERMANS G ET AL: "MOBILITY IN PRIVATE NETWORKS" PROCEEDINGS OF THE INTERNATIONAL SWITCHING SYMPOSIUM, YOKOHAMA, OCT. 25 - 30, 1992, Bd. 1, Nr. SYMP. 14, 25. Oktober 1992 (1992-10-25), Seiten 39-43, XP000337613 INSTITUTE OF ELECTRONICS;INFORMATION AND COMMUNICATION ENGINEERS
- MAASS H ET AL: "DIRECTORY SERVICES FOR MOBILITY MANAGEMENT IN PRIVATE TELECOMMUNICATION NETWORKS" PROCEEDINGS OF THE INTERNATIONAL CONFERENCE ON COMMUNICATIONS (ICC), GENEVA, MAY 23 - 26, 1993, Bd. 2, 23. Mai 1993 (1993-05-23), Seiten 1252-1256, XP000371272 INSTITUTE OF ELECTRICAL AND ELECTRONICS ENGINEERSISBN: 0-7803-0950-2

## Beschreibung

In zukünftigen Kommunikationsnetzen werden mobile bzw. drahtlose Kommunikationsendgeräte direkt an Kommunikationssysteme oder über Zubringereinrichtungen an Kommunikationssysteme angeschlossen. Die Zubringereinrichtungen und die Kommunikationssysteme können hierbei unterschiedlichsten Betreibern zugeordnet sein. Betreiber - in der Fachwelt als Operator bekannt - sind beispielsweise öffentliche Betreiber - z.B. Deutsche Bundespost - oder Betreiber von Privatnetzen - z.B. Firmennetze - und private Betreiber von Kommunikationssystemen im Wohnbereich. Die einzelnen Betreiber betreiben folglich einen öffentlichen Bereich - beispielsweise ein öffentliches Kommunikationsnetz -, einen privaten Bereich - beispielsweise ein privates Kommunikationsnetz - und einen Heim- Bereich. Ein mobiles Kommunikationsendgerät kann nun Zugriff zu einem oder mehreren Betreibern bzw. Bereichen besitzen, jedoch nur in einem der Bereiche hinsichtlich beispielsweise seiner Services und Dienste sowie Berechtigungen angemeldet sein - in der Fachwelt mit Subscription bezeichnet. Dies bedeutet, daß diese Subscription den anderen Bereichen nicht bekannt sein muß.

Desweiteren sind für eine Identifikation der jeweiligen Bereiche bzw. Basisstationen in diesen Bereichen bereichsspezifische Identifikationen vorgesehen, die in den Funkbereichen der Basisstationen der jeweiligen Bereiche verbreitet, d.h. rundgesendet werden. Gemäß beispielsweise dem DECT-Standard wird hierzu eine Identifikation - im DECT-Standard als International Portable User Identity bezeichnet periodisch ausgesandt. In beispielsweise aktuell aktivierten, d.h. aktuell eingeschaltet, oder 'roamenden', d.h. den Funkbereich wechselnden, mobilen Kommunikationsendgeräten wird nach Empfang einer Radio Fixed Part Identity - Meldung die mitübermittelte Identifikation mit einer gespeicherten Identifikation verglichen, wobei eine der gespeicherte Identifikation (PARK,PLI) anzeigt, daß das Kommunikationsendgerät auf den Bereich bzw. deren Basisstation zugreifen darf. Ist eine entsprechende Identifikation gespeichert, wird diese zugehörige, dem Kommunikationsendgerät eindeutig zugeordnete Identifikation (IPUI) in eine Location Registration - Meldung eingefügt und an die Basisstation bzw. den Bereich gesendet. Durch diese Location Registration - Meldung wird das betroffene Kommunikationsendgerät in dem Bereich bzw. deren Basisstation angemeldet. Im Bereich der Basisstation wird überprüft, ob die empfangene Identifikation in dem jeweiligen Bereich zugelassen ist, siehe z.B. die Ep-A-0 627 864.

In einem Kommunikationsendgerät können mehrere Identifikationen gespeichert werden, mit deren Hilfe das Kommunikationsendgerät für Zugriffe zu mehreren, unterschiedlichen Bereichen bzw. Kommunikationsnetzen berechtigt ist. Jedoch ist das jeweilige Kommunikationsendgerät eventuell in einem der Bereiche hinsichtlich beispielsweise seiner Services, Dienste sowie Berechtigungen erfaßt bzw. subscripiert. Dies bedeutet, daß diese Subscription den anderen Bereichen nicht bekannt ist. Um eine Subscription in den weiteren Bereichen bzw. Kommunikationsnetzen zu erreichen, müßte beispielsweise in jedem der Bereiche bzw. Kommunikationsnetze das jeweilige Kommunikationsendgerät subscripiert, d.h. angemeldet werden. Dies bedeutet eine umfangreiche Datenhaltung in den Bereichen bzw. Kommunikationsnetzen.

Der Erfindung liegt die Aufgabe zugrunde, eine mehrfache Datenhaltung durch eine mehrfache Subscription von Kommunikationsendgerät in mehreren Bereichen bzw. Kommunikationsnetzen zu vermeiden. Die Aufgabe wird ausgehend von einem Verfahren gemäß den Merkmalen des Oberbegriffs des Patentanspruchs 1 durch dessen kennzeichnende Merkmale gelöst.

Ein wesentlicher Aspekt des erfindungsgemäßen Verfahrens ist darin zu sehen, daß bei mehreren in den Kommunikationsendgeräten gespeicherten Identifikationen diese verknüpft werden können. Im Rahmen eines Zugriff eines Kommunikationsendgerätes zu einem Bereich bzw. Kommunikationsnetz kann durch eine Anfrage an das Kommunikationsendgerät ermittelt werden, ob der vom Kommunikationsendgerät gesendeten Identifikation eine verknüpfte Identifikation zugeordnet ist. Eine erfindungsgemäße Anfrage wird beispielsweise nach einer Überprüfung der vom Kommunikationsendgerät gesendeten Identifikation durchgeführt, sofern die Überprüfung ergibt, daß das jeweilige Kommunikationsendgerät zwar zu dem Bereich bzw. Kommunikationsnetz zugreifen darf, jedoch in diesem Bereich hinsichtlich beispielsweise seiner Services, Dienste sowie Berechtigungen nicht angemeldet bzw. subscripiert ist. Durch die Anfrage wird ermittelt, in welchen Bereich bzw. Kommunikationsnetz das jeweilige Kommunikationsendgerät angemeldet bzw. subscripiert ist. Mit Hilfe der verknüpften Identifikation, die den Bereich anzeigt, in dem das jeweilige Kommunikationsendgerät angemeldet ist, wird der angegebene Bereich ermittelt und die für eine weitere Vermittlung erforderlichen Subscriptions-Daten aus diesem Bereich bzw. Kommunikationsnetz abgerufen. Der wesentliche Vorteil des erfindungsgemäßen Verfahrens ist darin zu sehen, daß auf die speicher- und verwaltungsaufwendige, mehrfache Datenhaltung in den jeweiligen Bereichen verzichtet werden kann.

Vorteilhaft wird eine Verknüpfung durch eine Verknüpfungsinformation und bei unterschiedlichen Verknüpfungen durch unterschiedliche Verknüpfungsinformationen angezeigt, wobei bei unterschiedlichen Verknüpfungen unterschiedliche Anfragen durchgeführt werden können - Anspruch 2. Unterschiedliche Verknüpfungen sind für unterschiedlichste Anwendungen des erfindungsgemäßen Verfahrens vorgesehen.

Bei einer Anfrage wird besonders vorteilhaft eine im jeweiligen Bereich gebildete Identifikations-Anfrage-Meldung an das betroffene Kommunikationsendgerät gesendet und eine im Kommunikationsendgerät gebildete Identifikations-Antwort-Meldung an den jeweiligen Bereich gesendet, wobei in die Identifikations-Antwort-Meldung die verknüpften Identifikationen eingefügt werden - Anspruch 3. Der öffentliche Bereich ist vorteilhaft durch ein öffentliches Kommunikationsnetz und/oder ein öffentliches Mobilfunknetz, der private Bereich durch ein privates Kommunikationsnetz und der Heim-Bereich durch ein Heim- Kommunikationssystem realisiert - Anspruch 5. Bei einer Realisierung der Bereiche durch ein DECT-orientiertes Kommunikationsnetz - beispielsweise DECT- , GAP- oder CAP -Kommunikationsnetz - GAP für Generic Access Profile und CAP für CTM (Cordless Terminal Mobility) Access Profile - sind die Identifikations-Anfrage-Meldung sowie die Identifikations-Antwort-Meldung vorteilhaft gemäß dem DECT-Standard strukturiert - Anspruch 6.

Weitere vorteilhafte Ausgestaltungen sind den weiteren Ansprüchen zu entnehmen.

Das erfindungsgemäße Verfahren wird im folgenden anhand eines Blockschaltbildes und eines Ablaufdiagrammes näher erläutert. Dabei zeigen
- FIG 1: in einem Blockschaltbild mehrere Bereiche bzw. Kommunikationsnetze, und
- FIG 2: in einem Ablaufdiagramm das erfindungsgemäße Verfahren.

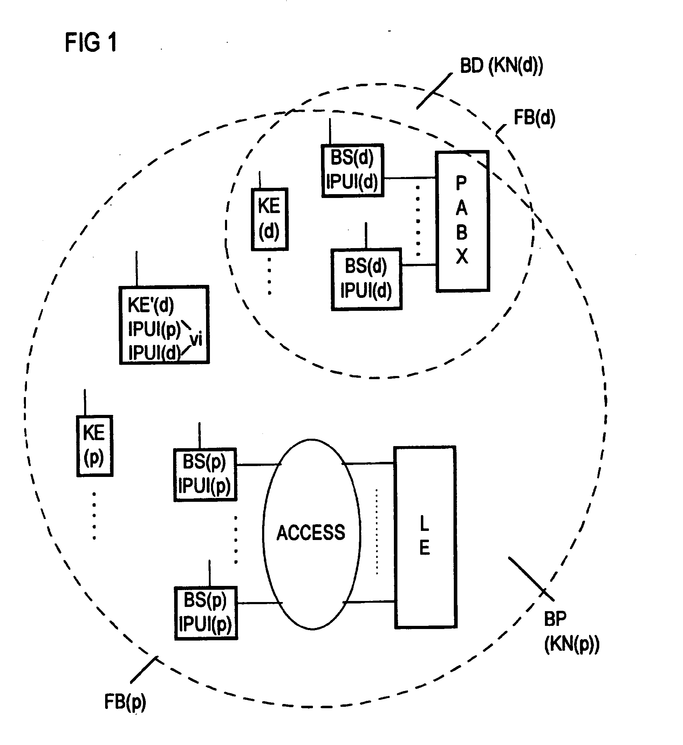

FIG 1 zeigt zwei Bereiche BP, BD, wobei ein Bereich ein privates Kommunikationsnetz KN(d) und der weitere Bereich BP ein öffentliches Kommunikationsnetz KN(p) darstellt. In jedem der beiden Bereiche BD, BP, sind Basisstationen BS(d,p) angeordnet, wobei die im öffentlichen Kommunikationsnetz KN(p) angeordneten Basisstationen BS(p) über ein Zubringernetz ACCESS an ein öffentliches Kommunikationssystem LE und die Basisstationen BS(d) des privaten Kommunikationsnetzes KN(d) an ein privates Kommunikationssystem PABX angeschlossen sind. Der Wirkungskreis der beiden Bereiche BD, BP bzw. Kommunikationsnetze KN(d,p), ist durch zwei strichlierte Kreise dargestellt, wobei durch die strichlierten Kreise jeweils die Summe aller Funkbereiche FB(d,p) der jeweiligen Kommunikationsnetze KN(p,d) umfaßt ist. An die Basisstationen BS(d,p) sind jeweils drahtlos Kommunikationsendgeräte KE(d,p) angeschlossen. Für das Ausführungsbeispiel sei angenommen, daß der drahtlose Anschluß gemäß dem DECT-Standard (Digital European Cordless Telecommunications) realisiert ist. Gemäß diesem DECT-Standard senden die Basisstationen BS(d,p) der beiden Bereiche BD, BP periodisch eine Radio Fixed Party Identity- Meldung RFPI aus, die eine Identifikation ARI enthalten. Diese Identifikation ARI umfaßt eine Bereichsinformation über die Zugehörigkeit der jeweiligen Basisstation BS(d,p) zu einem der Bereiche BD, BP, eine Information über den Operator bzw. Betreiber des jeweiligen Bereiches BD, BP bzw. Kommunikationsnetzes KN(d,p) - beispielsweise privater oder öffentlicher Betreiber. Zusätzlich enthält die Radio Fixed Party Identity- Meldung RFPI eine numerische Information, durch die die jeweilige Basisstation BS(d,p) definiert ist.

In den Kommunikationsendgeräten KE(d,p) der jeweiligen Bereiche BD, BP sind jeweils Subscriptions-Daten gespeichert, für deren Bereiche BD, BP diese Kommunikationsendgeräte KE(d,p) angemeldet bzw. so subscripiert sind. In den Subscriptions-Daten sind DECT-spezifische Identifikationen PARK und ARI sowie eine bereichsspezifische Identifikation enthalten. Dies bedeutet, daß die Kommunikationsendgeräte KE(d,p) bei einem Zugriff auf den zugeordneten Bereich BP, BD bzw. die zugeordnete Basisstation BS(d,p) die Identifikation IPUI(d,p) senden und in den Basisstationen BS(d,p) überprüft wird, ob ein Kommunikationsendgerät KE(d,p) mit der Identifikation IPUI(d,p) des eigenen Bereichs BD, BP zugreift. Darüber hinaus ist in zukünftigen Kommunikationsnetzen vorgesehen, daß von den jeweiligen Kommunikationsendgeräten KE(d,p) nicht nur Zugriffe auf den Bereich BP, BD, in dem diese subscripiert sind, sondern auch auf andere Bereiche BP, BD zugelassen werden.

Die Kommunikationsendgeräte KE(d,p) sind in den jeweiligen Bereichen BD, BP durch Beschreibungen in einer Datenbasis spezifiziert. Diese Beschreibungen umfassen beispielsweise Services, Dienste und Berechtigungen des jeweiligen mobilen Kommunikationsendgerätes KE(d,p). Sind nun Zugriffe auf andere Bereiche BP, BD bzw. Kommunikationsnetze KN(d,p) zugelassen, so wäre es naheliegend, in jedem der Kommunikationsnetze KN(p,d) eine Beschreibung bzw. Subscription des jeweiligen Kommunikationsendgerätes KE(d,p) zu hinterlegen bzw. zu speichern. Diese mehrfache Speicherung der Subscriptions-Daten kann mit Hilfe des erfindungsgemäßen Verfahrens verhindert werden.

Zur Erläuterung des erfindungsgemäßen Verfahrens ist beispielhaft in FIG 1 im öffentlichen Bereich BP ein Kommunikationsendgerät KE'(d) dargestellt, das im privaten Bereich BD subscripiert bzw. angemeldet ist. Das dargestellte Kommunikationsendgerät KE'(d) darf sowohl auf den privaten, als auch den öffentlichen Bereich BD, BP zugreifen. Hierzu ist in diesem Kommunikationsendgerät KE'(d) jeweils eine Identifikation IPUI (d,p) für den privaten und öffentlichen Bereich BD, BP gespeichert bzw. hinterlegt. Erfindungsgemäß ist zusätzlich eine Verknüpfungsinformation vi gespeichert, durch die eine Verknüpfung der beiden Identifikationen IPUI(d,p) dahingehend bewirkt wird, daß bei einer erfindungsgemäßen Anfrage eines Bereiches BD, BP nach einer verknüpften Identifikation IPUI(d,p) die verknüpfte Identifikation IPUI(d) - im Ausführungsbeispiel die Identifikation der IPUI(d) des privaten Bereichs BD - an den jeweiligen Bereich BP gesendet wird.

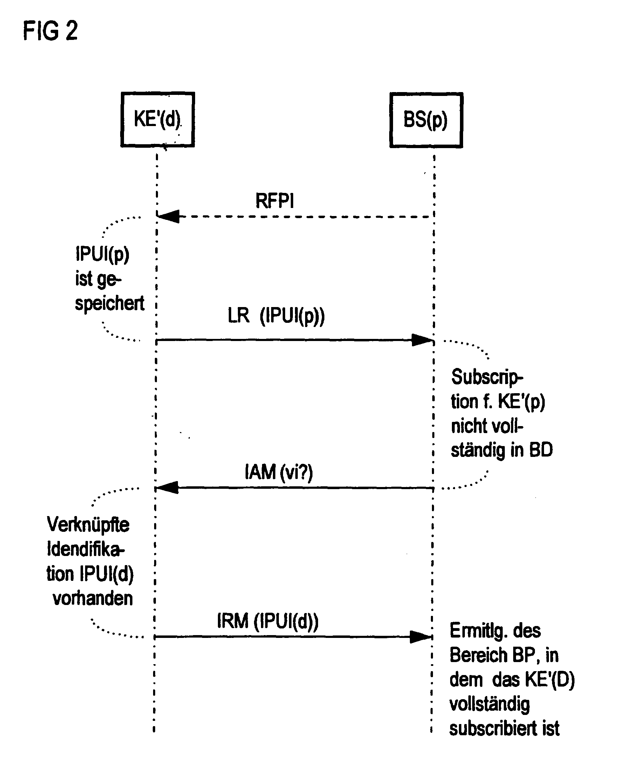

Das erfindungsgemäße Verfahren wird anhand von FIG 2 erläutert. Im Ausführungsbeispiel ist das in FIG 1 dargestellte Kommunikationsendgerät KE'(d) sowie eine Basisstation BS(d) des öffentlichen Bereichs BP bzw. öffentlichen Kommunikationsnetzes KN(p) jeweils durch eine senkrechte strichpunktierte Linie repräsentiert. Für das Ausführungsbeispiel sei weiterhin angenommen, daß das Kommunikationsendgerät KE'(d) von dem privaten Bereich BD in den öffentlichen Bereich BP wechselt. Das nachfolgend beschriebene Verfahren wird auch durch Aktivieren, das heißt durch Einschalten des Kommunikationsendgerätes KE'(d) nach einem stromlosen Zustand, eingeleitet.

Nach dem Empfang einer Radio Fixed Party Identity-Meldung RFPI von der Basisstation BS(p) wird im Kommunikationsendgerät KE'(d) anhand der mitübertnittelten Identifikation ARI überprüft, ob es zu dem öffentlichen Bereich BP zugreifen darf. Hierzu wird die empfangene Identifikation ARI mit den gespeicherten Identifikationen PARK,PLI verglichen und bei einer Übereinstimmung kann der Zugriff erfolgen. Der Zugriff wird durch Aussenden einer Location Registration-Meldung LR bewirkt, wobei in diese Location Registration-Meldung LR die Identifikation IPUI(p) des öffentlichen Bereichs BP eingefügt ist. Daraufhin wird in der Basisstation BS(p) überprüft, ob das zugreifende Kommunikationsendgerät KE'(d) in dem öffentlichen Bereich BP subscripiert ist. Da dieses Kommunikationsendgerät KE'(d) im privaten Bereich BD vollständig subscripiert ist, wird in der Basisstation BS(p) eine Identifikations-Anfrage-Meldung IAM gebildet und an das Kommunikationsendgerät KE'(d) gesandt, um eine verknüpfte Identifikation abzufragen.

Da gemäß dem Ausführungsbeispiel in dem Kommunikationsendgerät KE'(d) zu der Identifikation IPUI(p) des öffentlichen Bereichs eine verknüpfte Identifikation IPUI(d) vorliegt, wird diese in eine Identifikation-Antwort-Meldung IRM eingefügt und an die Basisstation BS(p) gesendet. Mit Hilfe dieser Identifikation IPUI(d) kann der öffentliche Bereich BP bzw. die Kommunikationssysteme LE des öffentlichen Bereiches BP den privaten Bereich BP bzw. das private Kommunikationsnetz KN(d) ermitteln und die Subscriptions-Daten abfragen. Diese Daten wie beispielsweise Services, Dienste und Berechtigungen werden im öffentlichen Bereich BP solange gespeichert, bis das Kommunikationsendgerät KE'(d) diesen Bereich wieder verläßt oder sich abmeldet. Gemäß dem DECT-Standard wird dieses Abmelden bzw. Verlassen bevorzugt durch eine "Detach-Meldung" angezeigt.

Durch das erfindungsgemäße Verfahren wird folglich eine mehrfache Speicherung und Verwaltung von aller Subscriptions-Daten in den unterschiedlichen Bereichen vermieden. Zusätzlich zu den im Ausführungsbeispiel dargestellten zwei Bereiche BD,BP sind erfindungsgemäß auch mehrere Bereiche, wie z.B. ein Heimbereich oder ein öffentlicher Bereich mit Mobilfunkanteilen möglich. Da hierbei gegebenenfalls mehrere Identifikationen IPUI in den Kommunikationsendgeräten KE gespeichert sind, können unterschiedlichste Verknüpfungen bzw. Verknüpfungsinformationen vi im Endgerät eingegeben werden. Die Eingabe dieser Verknüpfungsinformationen vi kann sowohl über die Bedieneroberfläche des jeweiligen Kommunikationsendgerätes KE als auch durch den Betreiber fest eingestellt, vorgegeben sein. Besonders vorteilhaft wird das erfindungsgemäße Verfahren auch bei mehreren privaten Bereichen BD - beispielsweise unterschiedlichsten Firmennetzen - eingesetzt, da beispielsweise für temporär in den jeweiligen Funkbereichen wechselnde Kommunikationsendgeräte KE keine Verwaltung und langfristige Speicherung von Subscriptions-Daten erforderlich ist. Das erfindungsgemäße Verfahren mit der Verknüpfung von Identifikationen IPUI in den mobilen Kommunikationsendgeräten KE kann auch für die Steuerung von Leistungsmerkmalen über mehrere Bereiche hinweg eingesetzt werden. Hierbei sind zur Unterscheidung von unterschiedlichen Verknüpfungen unterschiedliche Verknüpfungsinformationen vi vorgesehen, wobei bei eine Anfragen von den jeweiligen Bereichen Identifikationen mit bestimmten Verknüpfungen bzw. Verknüpfungsarten abgefragt werden können.

Das erfindungsgemäße Verfahren ist zusätzlich in Bereichen bzw. Kommunikationsnetzen einsetzbar, bei denen die mobilen Kommunikationsendgeräte drahtlos gemäß anderer Verfahren wie z.B. einem CDMA(Coded Digital Multiple Access)-orientierten Verfahren an die Basisstationen angeschlossen sind.

## Patentansprüche

1. Verfahren zum Subscripieren von Zugriffen von mobilen Kommunikationsendgeräten (KE) auf öffentliche, private bzw. Heim-Bereiche (BP,BD), an deren Basisstationen (BS(p,d))) die mobilen Kommunikationsendgeräte (KE) drahtlos anschließbar sind, wobei in den Funkbereichen (FB(p,d)) der Basisstationen (BS(p,d)) eine bereichsspezifische Identifikation (RFPI) verbreitet wird,
- bei dem den Kommunikationsendgeräten (KE(p,d)) zumindest eine bereichsspezifische Identifikation (IPUI(p,d)) zugeordnet ist,
- bei dem bei einem Zugriff eines Kommunikationsendgerätes (KE(p,d)) zu den jeweiligen Bereichen (BD,BP) die vom Kommunikationsendgerät (KE(p,d) gesendete Identifikation (IPUI(p,d)) in den jeweiligen Bereichen (BP,BD) überprüft wird,
**dadurch gekennzeichnet,**
- **daß** in den Kommunikationsendgeräten (KE) Verknüpfungen (vi) der zugeordneten Identifikationen (IPUI(p,d)) einstellbar sind, und
- **daß** bei einem Zugriff eines Kommunikationsendgerätes (KE(p,d)) im Rahmen der Überprüfung des Zugriffs der jeweilige Bereich (BD,BP) durch eine Anfrage bei diesem Kommunikationsendgerät (KE(p,d)) ermittelt wird, ob der gesendeten Identifikation (IPUI(p)) verknüpfte Identifikationen (IPUI(d)) zugeordnet sind.

2. Verfahren nach Anspruch 1, **dadurch gekennzeichnet, daß** eine Verknüpfung durch eine Verknüpfungsinformation (vi) und unterschiedliche Verknüpfungen durch unterschiedliche Verknüpfungsinformationen (vi) angezeigt werden, wobei bei unterschiedlichen Verknüpfungen unterschiedliche Anfragen durchgeführt werden können.

3. Verfahren nach Anspruch 1 oder 2, **dadurch gekennzeichnet, daß** bei einer Anfrage eine im jeweiligen Bereich (BD,BP) gebildete Identifikations-Anfrage-Meldung (IAM) an das betroffene Kommunikationsendgerät (KE(p,d)) gesendet, und daß eine im Kommunikationsendgerät (KE(p,d)) gebildete Identifikations-Antwort-Meldung (IRM) an den jeweiligen Bereich (BD,BP) gesendet wird, wobei in die Identifikations-Antwort-Meldung (IRM) die verknüpften Identifikationen (IPUI(d)) eingefügt werden.

4. Verfahren nach einem der Ansprüche 1 bis 3, **dadurch gekennzeichnet, daß** der öffentliche Bereich (BP) durch ein öffentliches Kommunikationsnetz (KN(P)) und/oder ein öffentliches Mobilfunknetz, der private Bereich (BD) durch ein privates Kommunikationsnetz (KN(d)) und der Heim-Bereich durch ein Heim-Kommunikationssysstem realisiert ist.

5. Verfahren nach einem der Ansprüche 1 bis 4, **dadurch gekennzeichnet, daß** die Kommunikationsendgeräte (KE(p,d)) gemäß einem DECT-orientierten Standard oder einem CDMA-orientierten Verfahren drahtlos an die jeweiligen Basisstationen (BS(p,d)) angeschlossen sind.

6. Verfahren nach Anspruch 5, **dadurch gekennzeichnet, daß** bei einem gemäß dem DECT-Standard realisierten drahtlosen Anschluß der Kommunikationsendgeräte (KE(p,d)) an die jeweiligen Basisstationen (BS(p,d)) die Identifikations-Anfrage-Meldung (IAM) sowie die Identifikations-Anwort-Meldung (IRM) gemäß dem DECT-Standard strukturiert sind.

## Claims

1. Method for subscribing accesses by mobile communication terminals (KE) to public, private or home areas (BP, BD) to the base stations (BS(p,d) of which the mobile communication terminals (KE) can be connected wirelessly, an area-specific identification (RFPI) being broadcast in the radio coverage areas (FB(p,d) of the base stations (BS(p,d),
- wherein at least one area-specific identification (IPUI(p,d)) is assigned to the communication terminals (KE(p,d)),
- wherein in the case of an access by a communication terminal (KE(p,d)) to the respective areas (BD, BP) the identification (IPUI(p,d)) sent by the communication terminal (KE(p,d)) is checked in the respective areas (BP, BD),
**characterised in that**
- links (vi) between the assigned identifications (IPUI(p,d)) can be set in the communication terminals (KE), and
- in the case of an access by a communication device (KE(p,d)), as part of the check on the access of the respective areas (BD, BP) it is determined by means of an inquiry at said communication terminal (KE(p,d)) whether linked identifications (IPUI(d)) are assigned to the sent identification (IPUI(p)).

2. Method according to claim 1, **characterised in that** one link is indicated by one element of linkage information (vi) and different links are indicated by different elements of linkage information (vi), it being possible to perform different inquiries with different links.

3. Method according to claim 1 or 2, **characterised in that** in the case of an inquiry an identification inquiry message (IAM) formed in the respective area (BD, BP) is sent to the communication terminal (KE(p,d)) concerned, and that an identification response message (IRM) formed in the communication terminal (KE(p,d)) is sent to the respective area (BD, BP), the linked identifications (IPUI(d)) being inserted into the identification response message (IRM).

4. Method according to one of the claims 1 to 3, **characterised in that** the public area (BP) is implemented by means of a public communication network (KN(P)) and/or a public mobile radio network, the private area (BD) by means of a private communication network (KN(d)), and the home area by means of a home communication system.

5. Method according to one of the claims 1 to 4, **characterised in that** the communication terminals (KE(p,d)) are connected to the respective base stations (BS(p,d)) wirelessly in accordance with a DECT-orientated standard or a CDMA-orientated method.

6. Method according to claim 5, **characterised in that** in the case of a wireless connection, implemented in accordance with the DECT standard, of the communication terminals (KE(p,d)) to the respective base stations (BS(p,d)) the identification inquiry message (IAM) and the identification response message (IRM) are structured in accordance with the DECT standard.

## Revendications

1. Procédé de souscription de terminaux de communication mobiles (KE) pour l'accès à des zones publiques, privées resp. locales (BP, BD) aux stations de base (BS(p,d)) desquelles les terminaux de communication mobiles (KE) peuvent être connectés sans fil, une identification spécifique à une zone (RFPI) étant propagée dans les zones d'émission (FB(p,d)) des stations de base (BS (p, d)),
- dans lequel au moins une identification spécifique à une zone (IPUI(p,d)) est associée aux terminaux de communication (KE(p,d)),
- dans lequel, lors d'un accès d'un terminal de communication (KE(p,d)) aux zones respectives (BD, BP), l'identification (IPUI(p,d)) envoyée par le terminal de communication (KE(p,d)) est vérifiée dans les zones respectives (BP, BD),
**caractérisé**
- **en ce que** des combinaisons (vi) des identifications associées (IPUI(p,d)) peuvent être réglées dans les terminaux de communication (KE) et
- **en ce que**, lors d'un accès d'un terminal de communication (KE(p,d)), on détermine grâce à une demande adressée à ce terminal de communication (KE(p,d)), dans le cadre de la vérification de l'accès à la zone respective (BD, BP), si des identifications combinées (IPUI(d)) sont associées à l'identification envoyée (IPUI(p)).

2. Procédé selon la revendication 1, **caractérisé en ce qu'**une combinaison est indiquée par une information de combinaison (vi) et différentes combinaisons sont indiquées par différentes informations de combinaison (vi), des demandes différentes pouvant être adressées pour des combinaisons différentes.

3. Procédé selon la revendication 1 ou 2, **caractérisé en ce que**, lors d'une demande, un message de demande d'identification (IAM) formé dans la zone respective (BD, BP) est envoyé au terminal de communication concerné (KE(p,d)) et **en ce qu'**un message de réponse d'identification (IRM) formé dans le terminal de communication (KE(p,d)) est envoyé à la zone respective (BD, BP), les identifications combinées (IPUI(d)) étant insérées dans le message de réponse d'identification (IRM).

4. Procédé selon l'une des revendications 1 à 3, **caractérisé en ce que** la zone publique (BP) est constituée par un réseau de communication public (KN(p)) et/ou un réseau de radiotéléphonie mobile public, la zone privée (BD) par un réseau de communication privé (KN(d)) et la zone locale par un système de communication locale domestique.

5. Procédé selon l'une des revendications 1 à 4, **caractérisé en ce que** les terminaux de communication (KE(p,d)) sont connectés sans fil aux stations de base respectives (BS (p, d) ) selon une norme orientée DECT ou un procédé orienté CDMA.

6. Procédé selon la revendication 5, **caractérisé en ce que**, dans le cas d'une connexion sans fil des terminaux de communication (KE(p,d)) aux stations de base respectives (BS(p,d)) réalisée selon la norme DECT, le message de demande d'identification (IAM) et le message de réponse d'identification (IRM) sont structurés selon la norme DECT.
